(19) Europäisches Patentamt
European Patent Office
Office européen des brevets

(11) Publication number: 0 157 519 B1

(12) # EUROPEAN PATENT SPECIFICATION

(45) Date of publication of patent specification: 30.08.89

(51) Int. Cl.[4]: C 09 K 19/48, C 09 K 19/22, C 09 K 19/20

(21) Application number: 85301757.2

(22) Date of filing: 14.03.85

(54) **Liquid crystal composition.**

(30) Priority: 28.03.84 JP 60342/84

(43) Date of publication of application: 09.10.85 Bulletin 85/41

(45) Publication of the grant of the patent: 30.08.89 Bulletin 89/35

(84) Designated Contracting States: DE FR GB

(56) References cited:
AT-B-350 122
DE-A-3 121 639
US-A-4 372 871

(73) Proprietor: SEIKO INSTRUMENTS INC.
31-1, Kameido 6-chome Koto-ku
Tokyo 136 (JP)

(73) Proprietor: TEIKOKU CHEMICAL INDUSTRY CO., LTD.
1-18, 1-chome Kitahorie
Nishi-ku Osaka (JP)

(72) Inventor: Taguchi, Masaaki
6-31-1, Kameido Koto-ku
Tokyo (JP)
Inventor: Suenaga, Hitoshi
5-41, Senzo
Itami-shi Hyogo (JP)

(74) Representative: Caro, William Egerton et al
J. MILLER & CO. Lincoln House
296-302 High Holborn
London WC1V 7JH (GB)

EP 0 157 519 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to liquid crystal compositions, particularly, although not exclusively valuable for electro-optical elements utilising response of ferroelectric smectic liquid crystal compositions to an electric field.

Liquid crystal materials have been utilised as electro-optical elements in various devices. Since liquid crystal materials have a compact structure and have a high energy efficiency, they are used, for example, as voltage-driven optical shutters for creating a display in watches or electronic table calculators. Liquid crystal materials currently in use are mainly nematic or cholesteric liquid crystal materials, and, because of their dielectric anisotropy, the long molecular axis is aligned in a given direction by an applied electric field. Since the dielectric coupling force to the applied electric field is relatively weak, the electro-optical response speed is too low for many applications.

Since a liquid crystal material may be driven by a low voltage and has a relatively small power consumption, its use with integrated circuitry is appropriate. Although known liquid crystal materials have such excellent properties, they are disadvantageous in that, in the case of application to a display device having many image elements, the response and non-linear characteristics are insufficient. Accordingly, the response and non-linear characteristics are insufficient. Accordingly, there has been much research and development into MOS display panels or TFT display panels where a switching element is provided for each image element.

U.S. Patent Specification No. 4,367,924 discloses a liquid crystal material based on a new display principle using the smectic phase, in which the above-mentioned defects are eliminated. This liquid crystal material will now be described briefly. Figure 1 is a diagram illustrating the smectic C* or H phase of a liquid crystal material. The liquid crystal material comprises respective molecular layers 1, and the average direction of the long axis of the molecule in these layers is inclined by an angle $\psi_o$ relative to the vertical direction to the layers. In the theses entitled "Ferroelectric Liquid Crystals" in Le Journal de Physique, Vol. 36, (March 1975, pages L-69 to L-71), Meyer et al disclose that a smectic C or H liquid crystal material composed of optically active molecules generally has an electric dipole moment $\vec{P}$ and is ferroelectric. This dipole moment $\vec{P}$ is vertical to the inclination direction $\hat{n}$ of the molecules and is parallel to the layer face of the smectic phase. Although what is taught in this thesis is applicable also to the smectic H phase, the visciousness to rotation around the axis vertical to the layer is large in the H phase. The presence of an electric dipole moment in the chiral smectic phase gives rise to a much stronger coupling force to the electric field than the dielectric anisotropy. Furthermore, this coupling force has a polar characteristic in the sense that the preferred direction of the dipole moment $\vec{P}$ is in a direction parallel to the electric field $\vec{E}$. Accordingly, if the direction of the applied electric field is inverted, the direction of the dipole moment $\vec{P}$ is inverted. Namely, by inversion of the electric field (the angle $2\psi_o$ will be referred to as the "cone angle" hereinafter), as shown in Figure 2, the direction of the dipole moment $\vec{P}$ can be controlled by the movement of the molecules along the cone. Accordingly, the liquid crystal material can be utilised as an electro-optical element by detecting changes of the molecules in the direction of the average long axis by means of two polarised plates.

In an electro-optical element utilising the response of this smectic C* or H phase of a liquid crystal material to an electric field, the coupling force between the spontaneous polarisation and the electric field is of the order of $10^3$ to $10^4$ times greater than the coupling force due to the dielectric anisotropy. Accordingly, the response speed element is higher than that of a TN type liquid crystal element and, if appropriate orientation control is selected, a memory characteristic can be obtained. Therefore, it is expected that such an electro-optical element can be applied to high-speed optical shutters or to display devices for displaying a relatively large quantity of information.

Various chiral smectic liquid crystal materials having this ferroelectric characteristic have heretofore been synthesised and investigated. The ferroelectric liquid crystal compound first synthesised was p-decyloxybenzilidene-p'-amino·2-methylbutyl cynanamate generally called "DOBAMBC". Ferroelectric liquid crystal compounds represented by the following general formula have been synthesized and investigated.

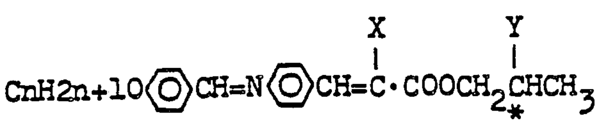

wherein X is H, Cl or CN, Y is Cl or $C_2H_5$, and the asterisk indicates an asymmetric carbon atom.

Since liquid crystal compounds of this general formula show the chiral smectic phase at a relatively high temperature, they have the disadvantage that they cannot be used at room temperature. Moreover, since the liquid crystal compounds are of the Schiff type, the stability is poor.

As an improved liquid crystal compound developed from the above-mentioned, B. I. Ostrovskii et al (Ferroelectrics, *24,* 309 (1980)) and A. Hallsby et al (Mol. Cryst. Liq. Cryst., Letter *82,* 61 (1982)) proposed a chiral smectic liquid crystal compound of the Schiff base type having a hydroxyl group introduced into one benzene ring and a hydrogen bond in the molecule, as represented by the following general formula:

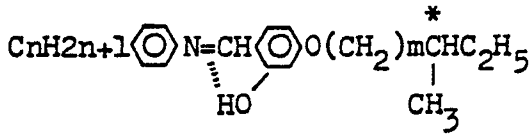

This compound has attracted attention as a compound showing the smectic C* phase in a broad temperature range including room temperature. Since this compound contains a hydrogen bond in the molecule, it has excellent stability compared to ordinary liquid crystal compounds of the Schiff base type. However, this compound still has insufficient stability at the customarily adopted organic sealing.

Furthermore, since the cone angle is much smaller than the 45° necessary for ideal contrast, contrast is low. Accordingly, this liquid crystal compound has not been put into practical use.

An azoxy type liquid crystal material was reported by P. Keller et al (Ann. Phys., 139 (1978)). However, since its applicable temperature range was insufficient and it was a dense yellow compound, this liquid crystal material has not been put to practical use.

Ester type liquid crystal materials are noted for their stability among TN type liquid crystal materials. The above B. I. Ostrovskii et al reference reports that a compound represented by the following formula:

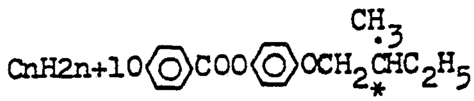 (n=9, 10)

shows a chiral smectic liquid crystal phase at temperatures relatively close to room temperature. Moreover, G. W. Gray et al (Mol. Cryst. Liq. Cryst., *37,* 189 (1976) and *48* 37 (1978)) reports a biphenyl ester type material showing a chiral smectic phase at relatively high temperatures.

As is apparent from the foregoing, a ferroelectric liquid crystal material that can be put into practical use has not yet been developed. Under these circumstances, it may be considered that the liquid crystal temperature range could be adjusted by blending or admixing a number of compounds as in the case of nematic liquid crystal compounds. However, in the case of the smectic C* phase, the liquid crystal temperature range is barely extended towards the low temperature side by blending, though this broadening is readily achieved in the case of blending nematic liquid crystal compounds, and it has been considered difficult to broaden the liquid crystal temperature range so that the liquid crystal phase is present at an applicable low temperature.

The present invention seeks to provide a liquid crystal composition which is formed by admixing specific liquid crystal compounds, and which shows a smectic C* phase even at low temperatures including normal (room) temperature and has an excellent display characteristic that cannot be attained by the specific liquid crystal compounds alone.

According to the present invention there is provided a liquid crystal composition characterised by comprising at least one optically active liquid crystal compound represented by the general formula:

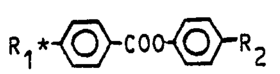 ou 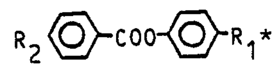

where $R_2$ is a linear alkyl group and $R_1$* is an alkoxy or acyloxy group having an asymmetrice carbon atom, and at least one optically active liquid crystal compound represented by the general formula:

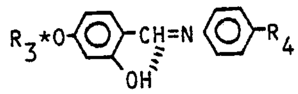

wherein $R_3$* is an alkyl group having an asymmetric carbon atom and $R_4$ is a linear alkyl group.

$R_1$* may be

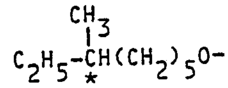

Alternatively, $R_1$* may be

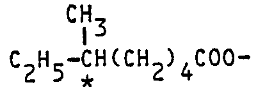

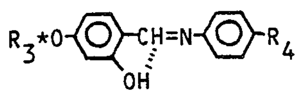 est 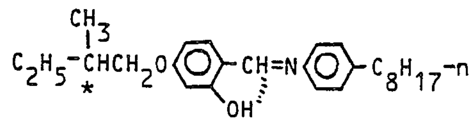

Alternatively,

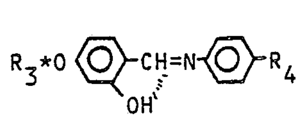 est 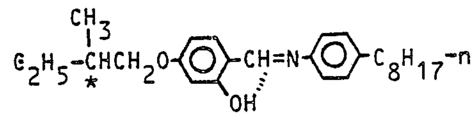

A further possibility is that

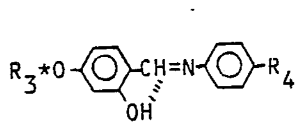 est 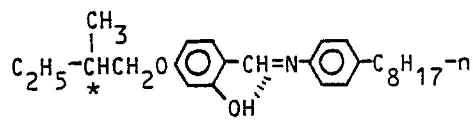

The invention is illustrated, merely by way of example, in the accompanying drawings, in which:—

Figure 1 is a model illustrating the smectic C* phase or H phase of a liquid crystal material;

Figure 2 is a model showing the movement of liquid crystal molecules in the chiral smectic phase of a liquid crystal compound by an electric field; and

Figures 3, 4, 5 and 6 are phase diagrams of various liquid crystal compositions according to the present invention.

It has been found that when an optically active liquid crystal compound represented by the following general formula:

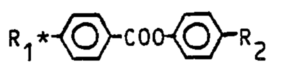 ou 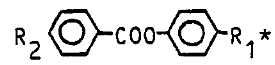

where $R_1$* is an alkoxy or acyloxy group having an asymmetric carbon atom and $R_2$ is a linear alkyl group, is admixed with an optically active liquid crystal compound represented by the following general formula:

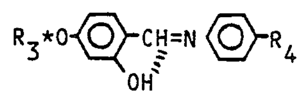

where $R_3$* is an alkyl group having an asymmetric carbon atom and $R_4$ is a linear alkyl group, the temperature range where the smectic C* phase appears is broadened towards the low temperature side. It has also been found that a liquid crystal composition so formed is ferroelectric, has a good contrast and a high response speed, and the defects of known ester type liquid crystal materials, that is, low response speed, and small cone angle, of the liquid crystal compound represented by formula (2) are eliminated.

From the results of experiments, it has been found that in the case of a compound having —O— groups on both the side chains, and represented by the following formula:

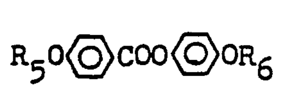 (3)

where one of $R_5$ and $R_6$ is an alkyl group having an asymmetric carbon atom and the other is a linear alkyl group, each of the —O— groups has a strong dipole moment in the direction of the short axis of the molecule (hereinafter referred to as the "lateral direction"), and there are present two of such groups and hence, the mutual action in the lateral direction of the molecules is strengthened. Accordingly, the above compound shows a smectic C* phase over a broad temperature range higher than normal temperature, but because of the strong mutual action in the lateral direction, the molecular movement along the cone hardly occurs and, when the compound is used in a display device, the response speed is low. In contrast, in a liquid crystal compound in which a —O— or —COO— group having a dipole moment in the lateral direction is included in only one side chain, as in a liquid crystal composition according to the present invention, the mutual action in the lateral direction is weakened and the smectic liquid crystal characteristic is weakened. It has been found that most liquid crystal compounds of this type show a monotropic smectic C* phase at relatively low temperatures close to normal temperature and these liquid crystal compounds have a higher response speed than those in which —O— or —COO— groups are introduced into both the side chains.

The compound represented by the formula (3) is poor in compatability with the liquid crystal compound represented by the formula (2), and even if both the compounds are admixed, it is difficult to broaden the temperature range showing the smectic C* phase at relatively low temperature. This will be readily understood, for example, from Figure 3, which is a phase diagram of an admixture of a liquid crystal compound A represented by the following formula:

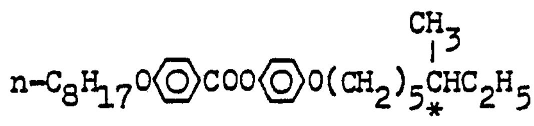

and a liquid crystal compound B represented by the following formula:

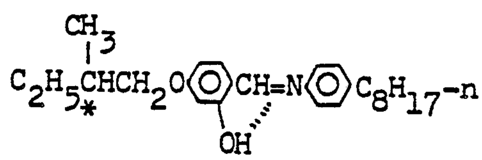

As is seen from the Examples given hereinafter, when the liquid crystal compound represented by the formula (1) is admixed with a compound of the formula (2), the temperature ranges bringing about the smectic C* phase can be broadened towards the low temperature side.

Moreover, by admixture, the electro-optical characteristics can be improved. More specifically, the ester type liquid crystal compound represented by the formula (1) has a relatively large cone angle and, at a temperature close to the lower limit temperature bringing about the smectic C* phase, this compound has a cone angle close to 45° giving an ideal contrast. However, this compound is defective in that the response speed is very low and the response time is of the order of milliseconds. In contrast, the liquid crystal compound represented by the formula (2) has a high response speed and the response time of this compound is of the order of microseconds, but at a temperature close to the lower limit temperature bringing about the smectic C* phase, the cone angle of the liquid crystal compound is as small as 30° to 35° and the compound is defective in that only a low contrast can be obtained. If these liquid crystal compounds are admixed, the merits of both can be exerted, that is, a large cone angle and a high response speed can be obtained, and in the resulting liquid crystal composition, the demerits of both liquid crystal compounds, that is, a low response speed and a small cone angle, can be eliminated.

The present invention will now be described in detail with reference to the following examples.

Example 1

A phase diagram of a liquid crystal composition comprising an ester type liquid crystal compound (compound C) of the following formula:

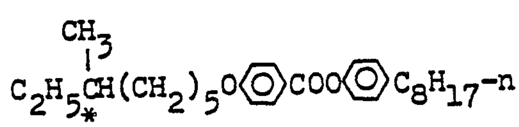

in admixture with a Schiff base type liquid crystal compound (compound B) having a hydrogen bond in the molecule, which is represented by the following formula:

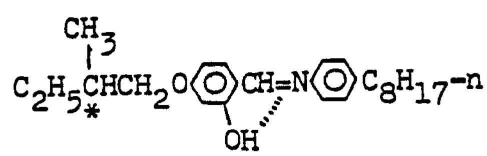

is shown in Figure 4.

The compound C shows the following phase transition:

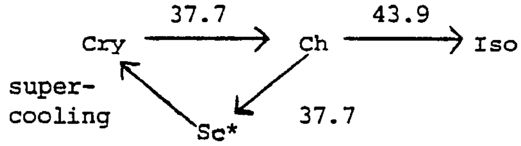

However, since the data obtained during elevation of the temperature are plotted, the compound C does not show the smectic C* phase in the phase diagram.

Characteristics of these liquid crystal compounds are shown in Table 1 (with respect to the compound C, data sampled in a super-cooled state are shown).

Table 1

| | Measurement Temperature | Cone Angle | Contrast | Response Time |
|---|---|---|---|---|
| Compound C | 30°C | 44° | 14.0 | 1.0 mS |
| Compound B | 30°C | 32° | 6.0 | 300 µS |
| C+B (1:1) | 25°C | 41° | 12.8 | 450 µS |

The foregoing data was determined under cross nicols, the liquid crystal compounds being inserted between substrates monoaxially orientated by PVA rubbing while adjusting the liquid crystal layer thickness to 3 µm and a voltage of ±10 V was applied.

As is seen from Figure 4, by admixing the compound C with the compound B, the smectic C* phase can be broadened towards the low temperature side, as compared with the case where either the compound C or the compound B is used alone. The liquid crystal composition formed by admixing the compounds C and B at a ratio of 1:1 shows a smectic C* phase in a temperature range of from 15 to 38°C during the elevation of the temperature, and the smectic C* phase could be maintained stably in a super-cooled state for a relatively long time. Moreover, as shown in Table 1, in connection with the display characteristics, this liquid crystal composition was improved in that the defects of both the compounds, that is, the low response speed of compound C and the low contrast of compound B were eliminated.

Example 2

A phase diagram of a liquid crystal composition comprising an ester type liquid crystal compound (compound D) of the following formula:

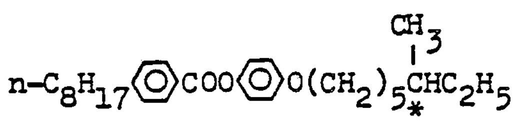

in admixture with a Schiff base type liquid crystal compound having a hydrogen bond in the molecule (compound B), represented by the following formula:

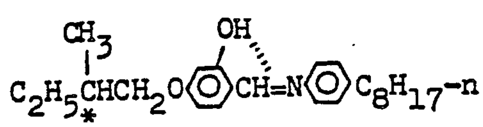

is shown in Figure 5.

The compound D shows the following phase transition:

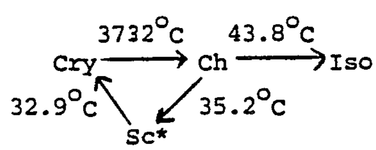


Since the data collected during the elevation of the temperature is plotted in Figure 5, the compound D does not show the smectic C* phase in the phase diagram.

Characteristics of these liquid crystal compounds are shown in Table 2 (with respect to the compound D, data sampled in a super-cooled state is shown).

Table 2

| | Measurement Temperature | Cone Angle | Constrast | Response Time |
|---|---|---|---|---|
| Compound D | 34°C | 40° | 9.5 | 1.7 mS |
| Compound B | 30°C | 32° | 6.0 | 300 µS |
| D+B (3:1) | 25°C | 40° | 11.5 | 700 µs |

The foregoing data was determined under crossed nicols, the liquid crystal compounds being inserted between the substrates monoaxially oriented by PVA rubbing while adjusting the liquid crystal layer thickness to 3 µm and a voltage of ±10 V was applied.

As is apparent from Figure 5, by admixing the compounds D and B, the smectic C* phase could be broadened towards the low temperature side, as compared with the case where either the compound D or the compound B is used alone. A liquid crystal composition formed by admixing the compounds D and B in a ratio of 3:1 showed a smectic C* phase at 20.0 to 39.8°C during elevation of the temperature, and in a super-cooled state, the smectic C* phase was stable for a relatively long time.

In Table 2, the cone angle of the liquid crystal composition of (D + B (3:1)) is the same as that of the compound D, 40°C, but the liquid crystal composition has a higher contrast. This is because the compound D is relatively poor in monoaxial orientability by the PVA rubbing treatment and in the liquid crystal composition, the monoaxial orientability by the PVA rubbing treatment is improved over that of compound D due to the influence of compound B. In connection with display characteristics, the low response speed of compound D and the low contrast of compound B were improved when admixed in a liquid crystal composition.

Example 3

A phase diagram of a liquid crystal composition comprising an ester type liquid crystal compound (compound E) of the following formula:

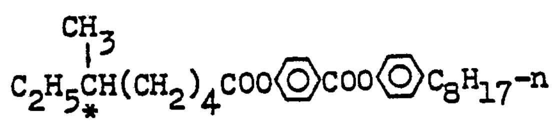

in admixture with a Schiff base type liquid crystal compound having a hydrogen bond molecule compound (compound B), represented by the following formula:

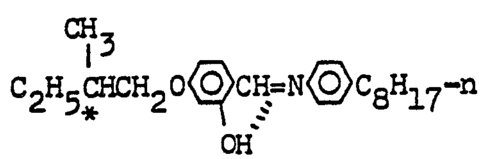

is shown in Figure 6.

The characteristics of these liquid crystal compounds are shown in Table 3. Incidentally, the data for the compound E is that sampled in a super-cooled state.

Table 3

| | Measurement Temperature | Cone Angle | Contrast | Response Time |
|---|---|---|---|---|
| Compound E | 30°C | 40° | 10.5 | 700 µS |
| Compound B | 30°C | 32° | 6.0 | 300 µS |
| E+B (1:3) | 30°C | 39° | 12.5 | 350 µS |

As is apparent from Figure 6, by admixing the compounds E and B, the smectic C* phase could be broadened towards the low temperature side, though only slightly, as compared with the case where either

the compound E or the compound B is used alone. A liquid crystal composition comprising the compounds E and B at a ratio of 1:3 showed a smectic C* phase at 24.5 to 38.6°C during the elevation of the temperature, and in a super-cooled state, the smectic C* phase was stable for a relatively long time.

In Table 3, the compound E has a higher contrast than the liquid crystal composition (E+B (1:3)) though the cone angle is smaller. This is because the liquid crystal composition has a higher monoaxial orientability due to the PVA rubbing treatment than the compound E, and this is due to the influence of the compound B. As is seen from the foregoing results, a liquid crystal composition having excellent display characteristics can be obtained by admixing compounds E and B.

## Example 4

A liquid crystal composition formed by admixing the following compounds showed a smectic C* phase at 3 to 54°C during the elevation of the temperature and the smectic C* phase could be maintained stably for a relatively long time in a super-cooled state:

compound C: 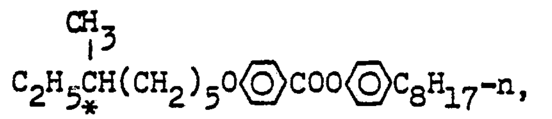 40 %

compound F: 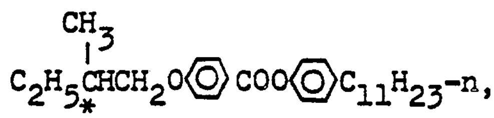 10 %

compound B: 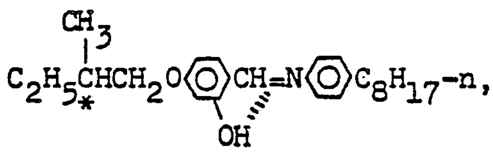 30 %

compound G: 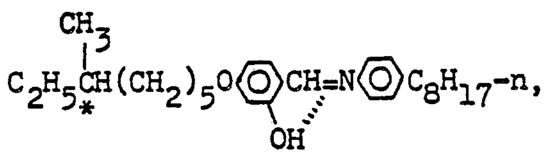 20 %

When the display characteristics of this liquid crystal composition were measured after inserting the liquid crystal composition between substrates subjected to the PVA rubbing treatment so that the liquid crystal layer thickness was 3.0 µm, it was found that the response time and contrast at 25°C were 350 µS and 15.0, respectively.

In the foregoing Examples, only specific compounds selected from the compounds represented by the general formulae (1) and (2) are illustrated. However, from various experiments, it has been confirmed that by blending an ester type liquid crystal compound of formula (1) with a Schiff base type liquid crystal compound of formula (2) having a hydrogen bond in the molecule, the smectic C* phase can be broadened towards the low temperature side, and the defects of the respective compounds, that is, low response speed, small cone angle and low contrast, can be eliminated in the resulting liquid crystal composition. Furthermore, when the Schiff base type liquid crystal compound having a hydrogen bond in the molecule are compared with an ordinary Schiff base type liquid crystal compounds, deterioration due to hydrolysis is reduced in the former type of liquid crystal compounds.

As is apparent from the foregoing description, according to the present invention, it is possible to provide a ferroelectric liquid crystal composition showing a smectic C* phase over a broad temperature range including normal (room) temperature, and so makes a great contribution to practical utilisation of ferroelectric liquid crystal display devices.

## Claims

1. A liquid crystal composition characterised by comprising at least one optically active liquid crystal compound represented by the general formula:

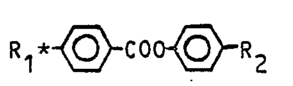 ou 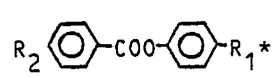

where $R_2$ is a linear alkyl group and $R_1$* is an alkoxy or acyloxy group having an asymmetric carbon atom, and at least one optically active liquid crystal compound represented by the general formula:

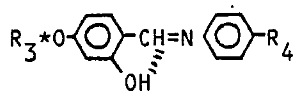

wherein $R_3$* is an alkyl group having an asymmetric carbon atom and $R_4$ is a linear alkyl group.

2. A liquid crystal composition as claimed in claim 1, characterised in that $R_1$* is

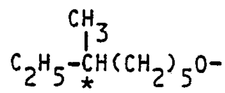

3. A liquid crystal composition as claimed in claim 1, characterised in that $R_1$* is

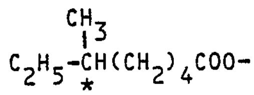

4. A liquid crystal composition as claimed in claim 1, characterised in that

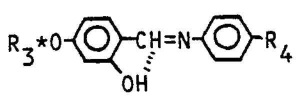 est 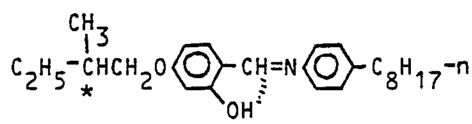

5. A liquid crystal composition as claimed in claim 2, characterised in that

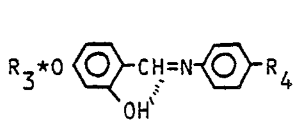 est 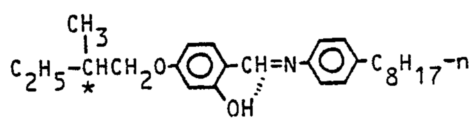

6. A liquid crystal composition as claimed in claim 3, characterised in that

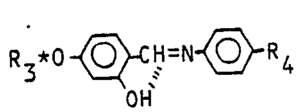 est 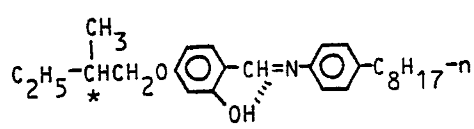

**Patentansprüche**

1. Flüssigkristall-Zusammensetzung, dadurch gekennzeichnet, daß sie mindestens eine optisch aktive Flüssigkristall-Verbindung umfaßt, die durch die folgende allgemeine Formel:

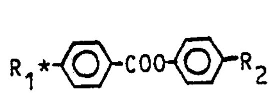 ou 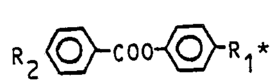

worin $R_2$ eine lineare Alkylgruppe und $R_1$* eine Alkoxy- oder Acryloxygruppe mit einem asymmetrischen Kohlenstoffatom ist, dargestellt wird und mindestens eine optisch aktive Flüssigkristall-Verbindung, die durch die allgemeine Formel:

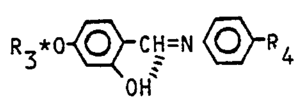

worin $R_3$* eine Alkylgruppe mit einem asymmetrischen Kohlenstoffatom und $R_4$ eine lineare Alkylgruppe ist, dargestellt wird.

2. Flüssigkristall-Zusammensetzung nach Anspruch 1, dadurch gekennzeichnet, daß $R_1$*

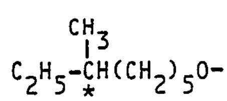

ist.

3. Flüssigkristall-Zusammensetzung nach Anspruch 1, dadurch gekennzeichnet, daß $R_1$*

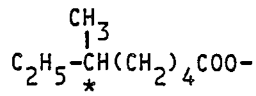

ist.

4. Flüssigkristall-Zusammensetzung nach Anspruch 1, dadurch gekennzeichnet, daß

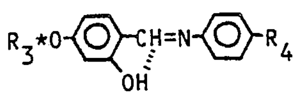 est 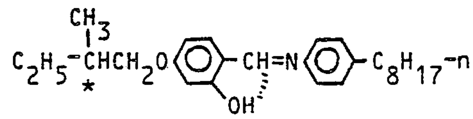

ist.

5. Flüssigkristall-Zusammensetzung nach Anspruch 2, dadurch gekennzeichnet, daß

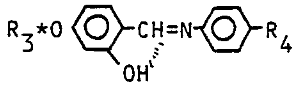 est 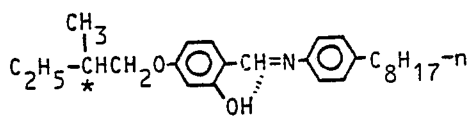

ist.

6. Flüssigkristall-Zusammensetzung nach Anspruch 3, dadurch gekennzeichnet, daß

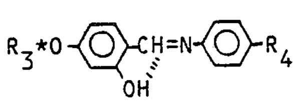 est 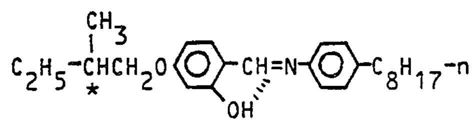

ist.

**Revendications**

1. Une composition liquide cristalline, caractérisée en ce qu'elle comprend au moins un composé liquide cristallin optiquement actif représenté par la formule générale:

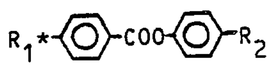 ou 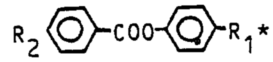

dans laquelle

$R_2$ est un groupe alkyle linéaire et $R_1$* est un groupe alcoxy ou acyloxy ayant un atome de carbone asymétrique,

et au moins un composé liquide cristallin optiquement actif représenté par la formule générale:

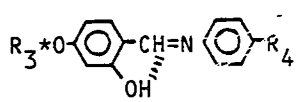

dans laquelle

$R_3$* est un groupe alkyle ayant un atome de carbone asymétrique et $R_4$ est un groupe alkyle linéaire.

2. Une composition liquide cristalline selon la revendication 1, caractérisée en ce que $R_1$* est

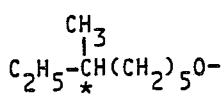

3. Une composition liquide cristalline selon la revendication 1, caractérisée en ce que $R_1$* est

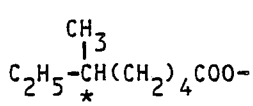

4. Une composition liquide cristalline selon la revendication 1, caractérisée en ce que

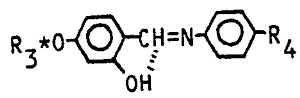 est 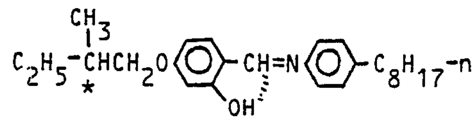

5. Une composition liquide cristalline selon la revendication 2, caractérisée en ce que

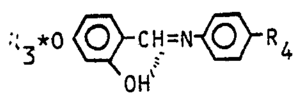 est 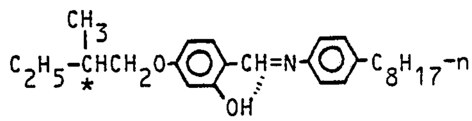

6. Une composition liquide cristalline selon la revendication 3, caractérisée en ce que

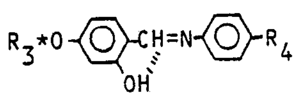 est 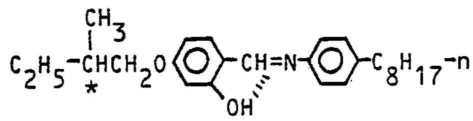

Fig.1.

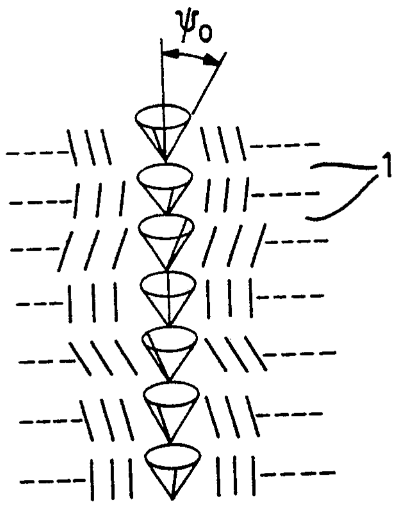


Fig.2.

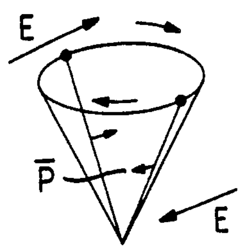

Fig.3.

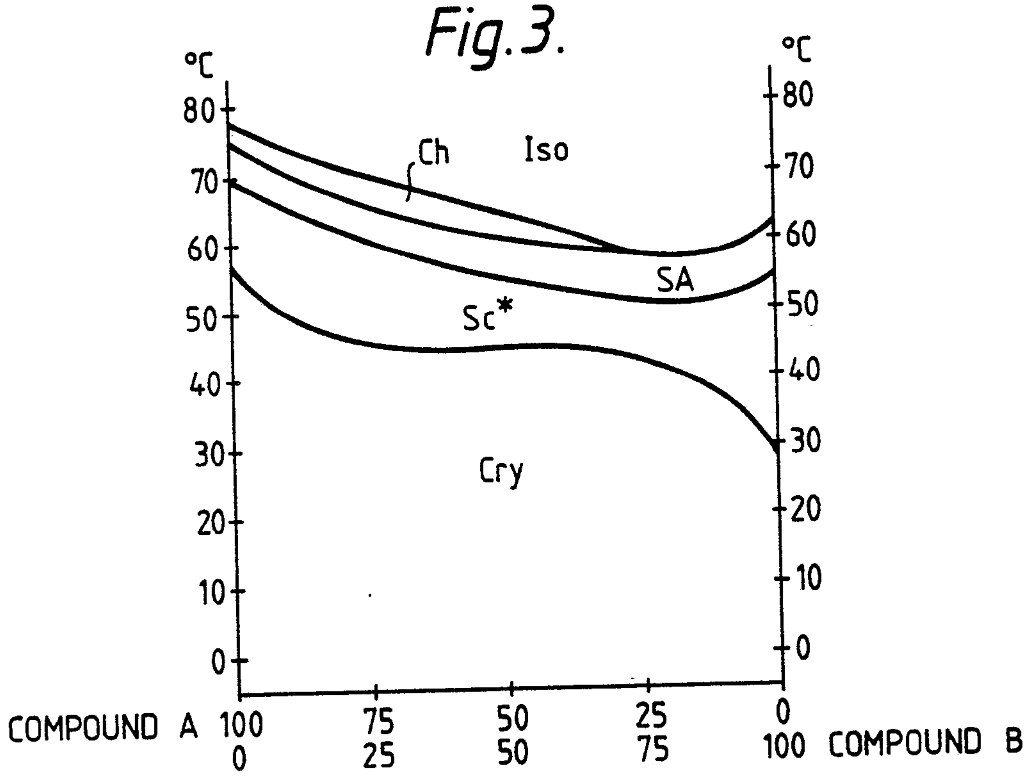
°C
°C
80
70
60
50
40
30
20
10
0
Ch
Iso
SA
Sc*
Cry
COMPOUND A 100 75 50 25 0
0 25 50 75 100 COMPOUND B

Fig.4.

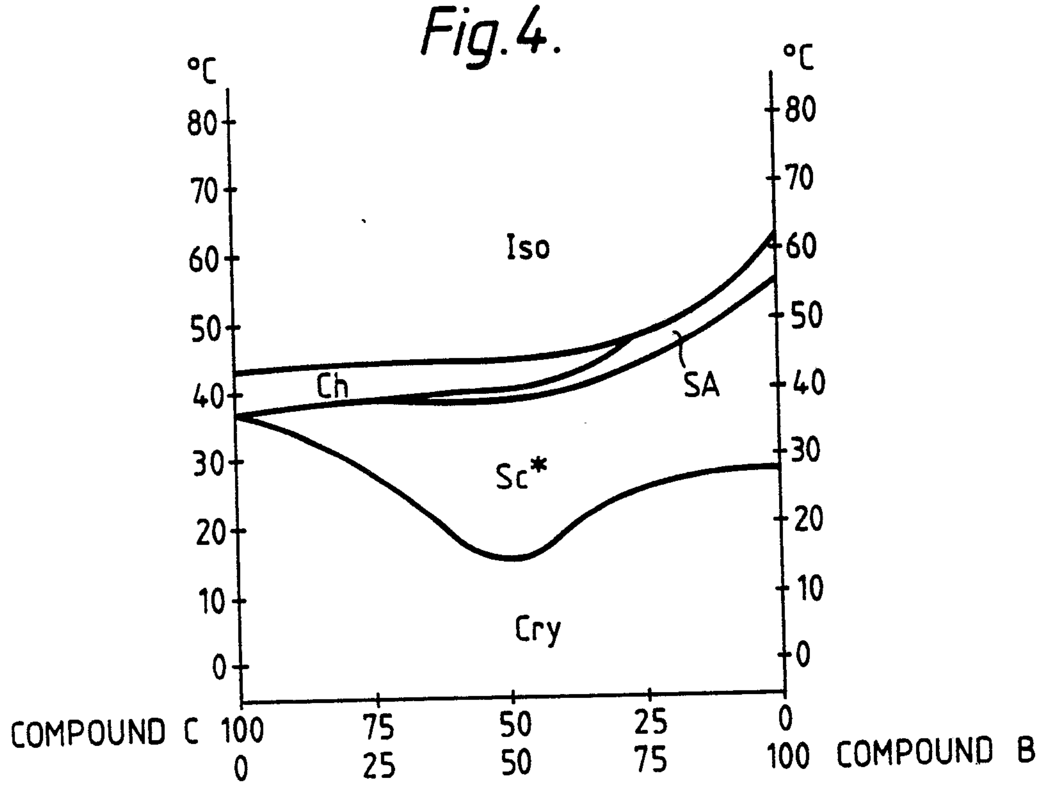
°C
°C
80
70
60
50
40
30
20
10
0
Iso
Ch
SA
Sc*
Cry
COMPOUND C 100 75 50 25 0
0 25 50 75 100 COMPOUND B

Fig.5.

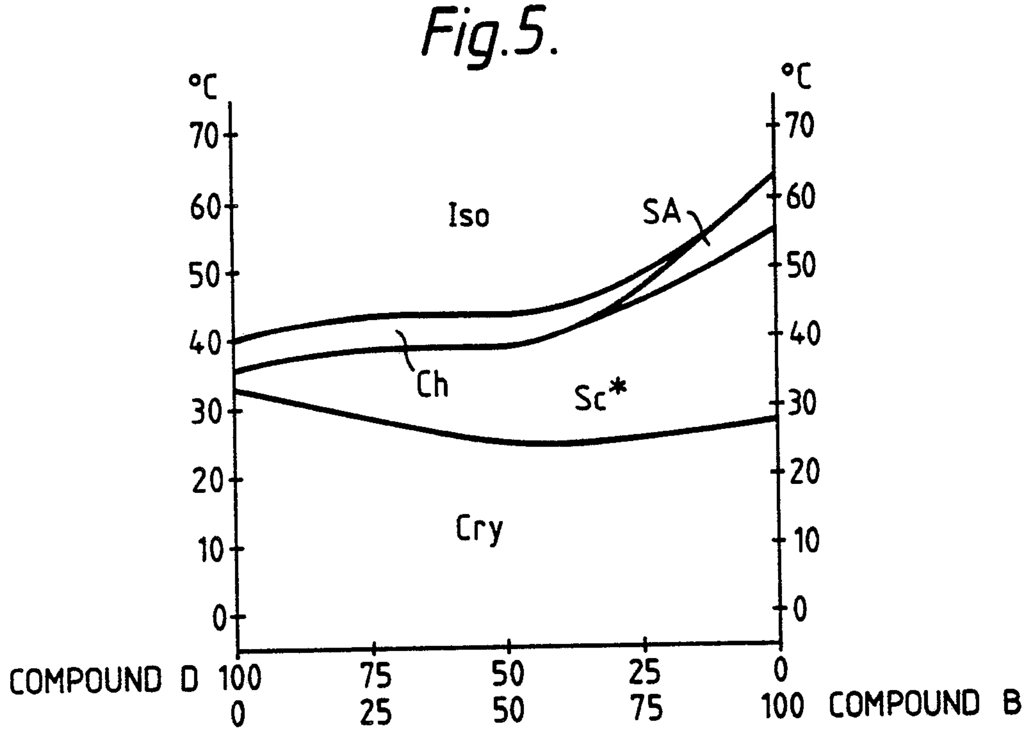
°C
70
60
50
40
30
20
10
0
Iso
SA
Ch
Sc*
Cry
°C
70
60
50
40
30
20
10
0
COMPOUND D 100 75 50 25 0
0 25 50 75 100 COMPOUND B

Fig.6.

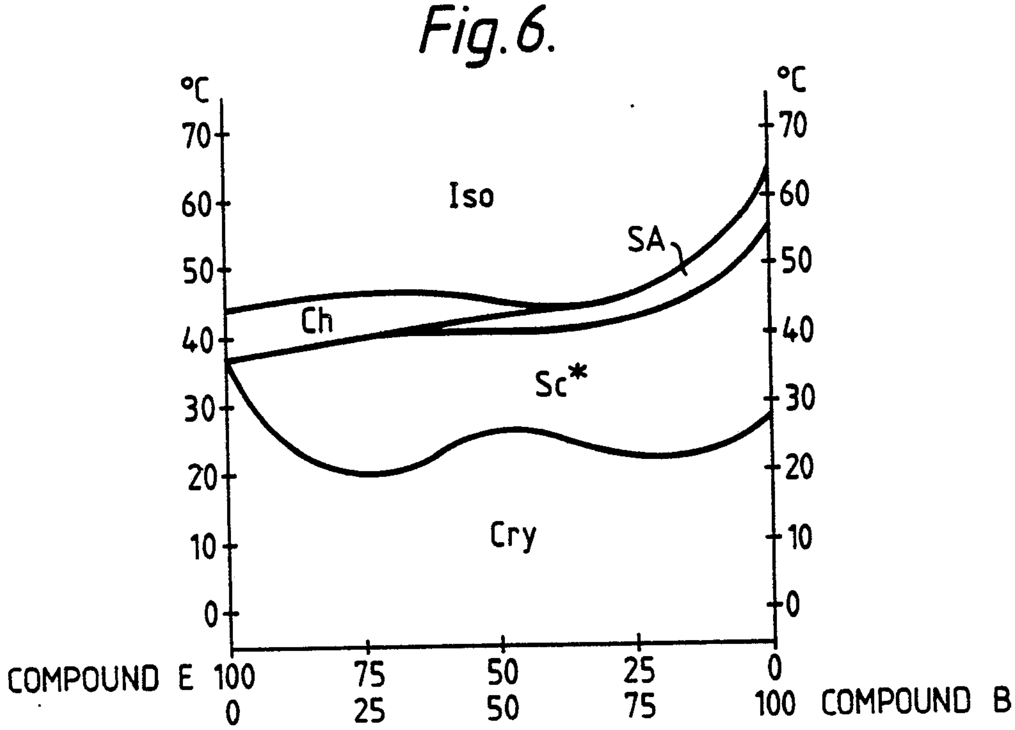
°C
70
60
50
40
30
20
10
0
Iso
SA
Ch
Sc*
Cry
°C
70
60
50
40
30
20
10
0
COMPOUND E 100 75 50 25 0
0 25 50 75 100 COMPOUND B